# EUROPEAN PATENT SPECIFICATION

(11) **EP 2 903 365 B1**
(45) Date of publication and mention of the grant of the patent: **07.03.2018**
(21) Application number: 14305134.0
(22) Date of filing: 30.01.2014
(51) Int. Cl.: H04W 72/00

(54) **CHANGING AN EXISTING SERVICE PROVIDED TO A GROUP OF USERS VIA WIRELESS COMMUNICATION**
ÄNDERUNG EINES BESTEHENDEN DIENSTES FÜR EINE GRUPPE VON BENUTZERN ÜBER DRAHTLOSE KOMMUNIKATION
MODIFICATION D'UN SERVICE EXISTANT PRÉVU POUR UN GROUPE D'UTILISATEURS PAR L'INTERMÉDIAIRE D'UNE COMMUNICATION SANS FIL

(43) Date of publication of application: 05.08.2015
(73) Proprietor: ALCATEL LUCENT, 92100 Boulogne-Billancourt (FR)
(72) Inventor: Worrall, Chandrika, Swindon, Wiltshire SN5 7DJ (GB)
(74) Representative: Sarup, David Alexander

(56) References cited:
- US-A1- 2013 170 450
- "3rd Generation Partnership Project; Technical Specification Group Radio Access Network; Evolved Universal Terrestrial Radio Access (E-UTRA); Study on Group Communication for E-UTRA (Release 12)", 3GPP DRAFT; 36868-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 2 December 2013 (2013-12-02), XP050733398, Retrieved from the Internet: URL:http://www.3gpp.org/ftp/Meetings_3GPP_ SYNC/RAN/RAN/Docs/ [retrieved on 2013-12-02]
- ALCATEL-LUCENT: "Discussion on use of Pre-established MRB for group communication", 3GPP DRAFT; R2-134389 USE OF PRE-ESTABLISHED MRB FOR GC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, U.S.A.; 20131111 - 20131115 13 November 2013 (2013-11-13), XP050737100, Retrieved from the Internet: URL:http://www.3gpp.org/ftp/Meetings_3GPP_ SYNC/RAN/RAN2/Docs/ [retrieved on 2013-11-13]
- ALCATEL-LUCENT SHANGHAI BELL ET AL: "ABBR based statistical multiplexing solution for eMBMS", 3GPP DRAFT; R3-091300_ABBR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090429, 29 April 2009 (2009-04-29), XP050341652, [retrieved on 2009-04-29]

## Description

### FIELD OF THE INVENTION

The invention relates to wireless communication and in particular to the broadcast of data to multiple users from multiple base stations.

### BACKGROUND

Wireless telecommunications networks are known. In a cellular system, radio coverage is provided by areas known as cells. Abase station is located in each cell to provide the radio coverage. Information and data transmitted by the base station to the user equipment occurs on channels of radio carriers known as downlink carriers. Information and data transmitted by user equipment to the base station occurs on uplink data channels of radio carriers known as uplink carriers.

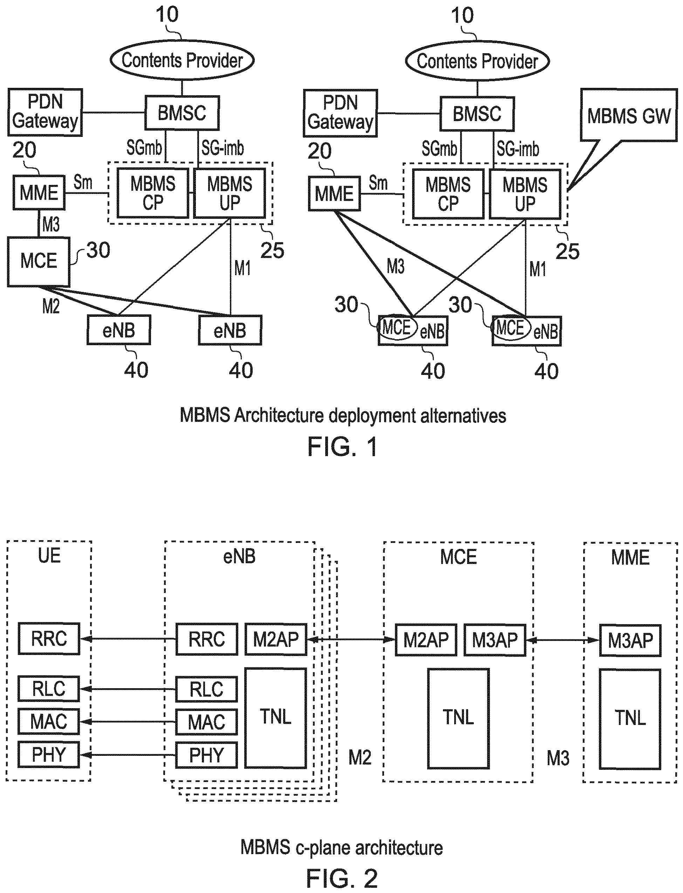

A multimedia broadcast multicast service MBMS is known that broadcasts data such as video data via a wireless communication network to a group of users. Figures 1 and 2 show examples of the architecture used to deploy such a signal. A content or application provider 10 provides the content, often in encrypted form, to the broadcast multicast service centre BMSC. The BMSC supplies the content to the base stations eNBs via M1 signalling, while the control signals for controlling the transmission of the content is sent via the core network MME to the base stations. This architecture with a different route for user data and control was devised owing to the particular requirements of such a system. In effect there is a lot of data that must be sent in a small time, however, a delay before the initial broadcast, and the dropping of some packets is acceptable.

Where such signals are sent to multiple neighbouring cells, it has been found to be advantageous if each base station transmits the same signal in a tightly synchronised way, such that rather than signals from neighbouring base stations interfering with each other in a destructive fashion, there is constructive interference or over air combining which provides a high quality signal with spectral efficiency. The synchronisation of the signals from each of the eNBs is controlled by the MCE multicast coordinating entity which may be a separate entity between the core network MME or be located at each eNB.

Currently public safety communications are sent via a separate wireless system. It would be desirable to be able to use existing wireless communication networks to send such signals. A feature of such signals is that they are often broadcast as signals from one user to multiple users. This is similar to the MBMS system and thus, adapting this system for use for public safety communications seems desirable. However, one aspect of the MBMS system is that the control data that is sent in an MCCH channel (multicast control channel) is only updated every 5 or 10 seconds. In public safety communications many of the communications would be voice communications which have their own quality of service QoS requirements while some might be video which have different QoS requirements. Changing the QoS of the communication channel requires a change in control data and a delay in sending such information such as is present in the MBMS system would not be acceptable for public safety communication.

It would be desirable to be able to use the MBMS system for broadcasting other types of media without incurring a substantial delay when a change in the media is required.

US2013/0170450 discloses a way of broadcasting two data streams in a multicasting area where either may be required. Each time the multiplexing format changes a sync packet is transmitted along with a bitmask which instructs a target UE where the sources of the respective payload portions of the multiplexed stream are to be found within the multiplexed stream.

### SUMMARY

A first aspect of the present invention provides a method performed at a synchronising entity of synchronising the broadcasting of data by multiple base stations to groups of multiple users via a wireless communication network such that the same data is broadcast at substantially the same time by each of said multiple base stations such that a user equipment receiving the same signal from multiple base stations can make use of the multiple same signals when decoding, comprising: receiving from a network control node information regarding a change in service to be provided to a first group of multiple users receiving an existing service from a multimedia broadcast multicast gateway; transmitting control data regarding said change in service to said multiple base stations along with an indicator of where in a multiplexed data stream, comprising said existing service, said control data should be inserted; wherein said control data comprises radio bearer information indicating a traffic channel for transmitting user data of a new service and configuration information for transmission of said user data.

The present invention recognises that although MBMS services provide the capability of broadcasting information to multiple users they are configured such that any change in the control of the channel may occur with a significant time delay, such a change being signalled about every 5 seconds. Thus, the use of such channels as public safety channels might have the advantage of providing the required signalling to multiple users but would require an improvement in the control changing latency.

One way to address this might be to multiplex the control data onto the data or traffic channel MTCH. However, the architecture has been designed for separate control and data paths and inserting control data into the data stream and maintaining signals broadcast by neighbouring base stations to be substantially identical and synchronised is not straightforward.

Thus, although providing the control signal multiplexed into the user data signal addresses the time delay problem it raises its own problems as when broadcasting information to multiple users, neighbouring base stations within a MBSFN or multimedia broadcast single frequency network transmit the same signal in a tightly synchronised way. This allows user equipment to receive the same signal from multiple base stations with any difference in timing being minor and similar to the differences that occur during transmission from a single base station due to signal reflections. Thus, the user equipment can make use of the multiple signals when decoding. Maintaining such synchronisation when a control signal is inserted into the data stream requires careful handling.

This has been addressed by the inventors of the present invention by a network control node transmitting to the multiple base stations an indication of where in a data stream that is currently being transmitted to the group of users this control data should be inserted. In this way, by using a signal that is already being sent to the required group of users and by indicating how the signal should be amended, the signal can be amended in the same way by all of the base stations, and they can continue to send tightly synchronised signals and still provide the control information required for the change in the service multiplexed in the data stream.

In some embodiments, said change in service comprises providing said new service to said group of multiple users.

In order for the user equipment to be able to receive and decode the new service, the radio bearer information of the channel to be used along with configuration information needs to be sent to the user equipment. Sending it as part of control data that is associated with a signal that is being received by the user equipment using an existing service is one way of sending this data.

A new service may be provided to the users currently receiving an existing service. Control data multiplexed in the data stream indicates this to the user equipment that can then monitor for, receive and decode the new service. In this regard the new service may simply be a change in media of the existing service, this change in media being transmitted on a new channel with a different QoS.

In some embodiments, said existing service is transmitted on a first transmission channel and said control data is transmitted on said first transmission channel appended to user data of said existing service.

Using the transmission channel used for the data of the existing service and appending the control data to the user data on this service is a convenient way of transmitting the relevant data to the relevant user equipment and provided there is some centralised control of where this control data should be inserted into this data stream a synchronised signal can be maintained at the multiple base stations.

In some embodiments, said multiplexed data stream comprises a multiplexed stream of different traffic channels each transmitting different user data, said multiplexed stream comprising a plurality of scheduling information blocks MSIs transmitted with a predetermined periodicity once every predetermined scheduling time period MSP, said indicator indicating where with respect to said predetermined scheduling time period said control data is to be transmitted.

Although the multiplexed data stream may be synchronised in a variety of ways in some embodiments the multiplexed data stream is synchronised in time by the use of scheduling periods, with scheduling information MSI being transmitted at the start of each scheduling period. Thus, by using these synchronised points in the data stream as a reference for the insertion of the control data, the control data can be inserted into the multiplexed stream in a synchronised manner by the multiple base stations broadcasting data to the multiple user group.

In some embodiments, the method further comprises transmitting a format of the control data along with the indicator.

In addition to instructing the base stations as to where to insert the control data, instructing them as to the format allows the control data to be consistently inserted and take up the same space in the signal for each of the base stations, allowing the relevant portions of the signals that are sent as broadcast signals to the multiple users to remain substantially identical and synchronised.

A second aspect of the present invention provides a synchronising entity for the broadcasting of data by multiple base stations to groups of multiple users via a wireless communication network such that the same data is broadcast at substantially the same time by each of said multiple base stations, stations such that a user equipment receiving the same signal from multiple base stations can make use of the multiple same signals when decoding, comprising: receiving circuitry configured to receive information from a network control node regarding a change in service to be provided to a first group of multiple users receiving an existing service from a multimedia broadcast multicast gateway; control logic configured to generate an indicator indicating where in a multiplexed data stream comprising said existing service control data regarding said change in service should be inserted ; a transmitter configured to transmit said control data regarding said change in service to said multiple base stations along with an indicator of where in a multiplexed data stream, comprising said existing service, said control data should be inserted; wherein said control data comprises radio bearer information indicating a traffic channel for transmitting user data of a new service and configuration information for transmission of said user data.

The synchronising entity that controls where in the data stream the control data should go may be located at the network control node itself, or on each of the multiple base stations or it maybe located somewhere between the network control node and the base stations.

A third aspect of the present invention provides a method of broadcasting of data to a group of multiple users via a wireless communication network by a base station, comprising: receiving at least one stream of user data to be provided as an existing service from a multimedia broadcast multicast gateway to a first group of multiple users; receiving from a network control node information regarding a change in service to be provided to said first group of multiple users and receiving an indicator indicating where in a multiplexed data stream comprising said existing service, control data indicating said change in service should be inserted; inserting said control data into said multiplexed data stream at said location indicated by said indicator such that said control data is received by said first group of users; wherein said control data comprises radio bearer information indicating a traffic channel for transmitting user data of a new service and configuration information for transmission of said user data; and broadcasting said multiplexed data stream.

As noted previously, if control data is to be multiplexed into a user data stream that is broadcast in a substantially identical and synchronised manner by multiple base stations then it is important that it is received by the right group of users and that it is inserted in a consistent manner by each base station. Thus, providing base stations that are each configured to respond to receiving an indicator indicating where control data should be inserted into a multiplexed data stream by inserting the control data at the indicated place, then the control data can be inserted into the multiplexed data stream in a consistent manner by each base station receiving such a signal. It should be noted that the indicator may be received from the network control node where the synchronising entity is located there. Alternatively, it may be received from a synchronising entity located on the base station itself.

In some embodiments, said existing service is transmitted on a first transmission channel and said control data is transmitted on said first transmission channel appended to user data of said existing service.

As an existing service is being transmitted to the users that are to receive the new service, appending the control data to the user data of that existing service allows it to be received by the appropriate users. Provided that the control data is appended in a consistent manner by all of the base stations then an identical or substantially identical signal will be sent. In this regard the appending of the control data may comprise placing it at one end of the user data (beginning or end), or it may be simply adding it to the user data at a predetermined place, the important thing is that the base stations behave consistently.

In some embodiments, said multiplexed data stream comprises a multiplexed stream of different traffic channels each transmitting different user data, said multiplexed data stream comprising scheduling information blocks MSIs transmitted at a predetermined periodicity once every predetermined scheduling time period MSP, said indicator indicating where with respect to said predetermined scheduling time period said control data is to be transmitted.

One way of synchronising the transmission of the signal is by the use of the scheduling information blocks which are provided within the multiplex data stream at predetermined points. These can be used to synchronise the signal, and inserting the control data at a predetermined place with respect to them ensures that this signal is also synchronised.

In some embodiments, said method comprises inserting a flag into said multiplexed data stream said flag indicating that said multiplexed data stream comprises said control data.

Although the user equipment may recognise the data as control data in a number of ways, one way is to use a flag within the signal that indicates that the signal comprises both control and user data. If, for example, a predetermined position in a data packet is provided as a flag position then setting this flag will indicate that that packet comprises both user data and control data multiplexed together. This is a convenient way of enabling the user equipment to detect and decode the control data.

In some embodiments, said multiplexed data stream comprises a multiplexed stream of different transmission channels, said existing service being transmitted on a first transmission channel and said flag being located prior to user data transmitted on said first transmission channel.

It may be convenient for the flag to be located prior to the user data on the transmission channel that comprises the multiplexed user and control data. In some cases, the control data will follow the flag, followed by an indication of its size and then followed by the data itself. In this way, the user equipment can separate the control data and the user data in a straightforward manner. In effect the format of the user data control data and flag should be provided in a consistent manner to aid the user equipment to identify and decode each different piece of data.

A fourth aspect of the present invention provides a base station configured to broadcast data to a group of multiple users via a wireless communication network, comprising: a receiver configured to receive at least one stream of user data from a multimedia broadcast multicast gateway, said user data to be provided as an existing service to a first group of multiple users and to receive from a network control node information regarding a change in service to be provided to said first group of multiple users and to receive an indicator indicating where in a multiplexed data stream comprising said existing service, control data indicating said change in service should be inserted; control logic configured to insert said control data into said multiplexed data stream at said location indicated by said indicator such that said control data is received by said first group of users; wherein said control data comprises radio bearer information indicating a traffic channel for transmitting user data of a new service and configuration information for transmission of said user data.

A fifth aspect of the present invention provides a method of receiving a broadcast multiplexed data stream at a user equipment said data stream comprising a multiplexed stream of different transmission channels each transmitting different user data, said multiplexed stream comprising a plurality of scheduling information blocks MSIs transmitted with a predetermined periodicity once every predetermined scheduling time period MSP; said user equipment comprising a data store for storing at least one transmission group identity and associated transmission channel, said user equipment being configured to monitor at least one transmission channel associated with at least one predetermined group identity; said method comprising receiving said transmission channel of said predetermined group identity; detecting control data associated with user data on said received transmission channel, said control data comprising radio bearer information indicating a traffic channel for transmitting user data of a new service and configuration information for transmission of said user data; determining a change in an existing service from said control data; monitoring for said changed service.

User equipment that use the MBMS system have a data store that stores a list of transmission group identities and associated transmission channels. When they register for a particular service they will be provided with a transmission group identity and can monitor the associated transmission channel. They may also store the application type and configuration data for that channel. In this regard, this information maybe transmitted to the user equipment from the MBMS service as control data.

When the user equipment is receiving a transmission channel for a group identity to which it has subscribed and it detects control data multiplexed with the user data, it can determine from this control data that a change in service is to be provided and can monitor for this changed service. The changed service may be a new service to be transmitted on a new transmission channel, in which case the user equipment will monitor the new transmission channel. In such a case it will then store the new transmission channel associated with the predetermined group identity in the data store. In this regard, it may provide it with a new group identity that is linked to the group identity of the existing service. This may be helpful as the two services are linked services, the new service being provided to the same users as the existing service.

A sixth aspect of the present invention provides a user equipment configured to receive a broadcast multiplexed data stream, said data stream comprising a multiplexed stream of different transmission channels each transmitting different user data, said multiplexed stream comprising a plurality of scheduling information blocks MSIs transmitted with a predetermined periodicity once every predetermined scheduling time period MSP; said user equipment comprising a data store for storing at least one transmission group identity and associated transmission channel, said user equipment being configured to monitor at least one transmission channel associated with at least one predetermined group identity; a receiver configured to receive said transmission channel of said predetermined group identity; control logic configured to detect control data associated with user data on said received transmission channel and to determine a change in an existing service from said control data and to control said receiver to monitor for said changed service; wherein said control data comprises radio bearer information indicating a traffic channel for transmitting user data of a new service and configuration information for transmission of said user data.

A seventh aspect of the present invention provides a computer program which when executed by a data processing apparatus controls said data processing apparatus to performs a method according to first, third or fifth aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates two alternative architectures for providing an MBMS service;
Figure 2 illustrates the MBMS control-plane architecture
Figure 3 illustrates the overall user-plane architecture of the MBMS content synchronisation;
Figure 4 illustrates adding a new media service to an on-going multicast delivery session;
Figure 5 shows an example of a list of group identity information and corresponding channels;
Figure 6 shows a signal broadcast by a base station according to an embodiment of the present invention; and
Figure 7 shows a wireless communication system according to an embodiment of the present invention.

### DESCRIPTION OF THE EMBODIMENTS

Before discussing the embodiments in any more detail, first an overview will be provided.

A way of supporting public safety communications within an MBMS procedure is provided that adds new media streams to an ongoing group communication either by adding a new service with a new channel or by changing g the configuration of an existing channel to make it suitable for the new media.

In one example, a group member using voice communication may add a new video clip to the communication. Communication of such new media may have different quality of service QoS requirement to the ongoing data transmission. In such a scenario, the new media may need to be delivered on a separate transmission channel. In a legacy MBMS transmission a MBMS control channel MCCH is used to transmit the bearer information of MBMS when a new transmission channel is to be used. Legacy MCCH has 5.12s of minimum modification period, which introduces a delay to the new media transmission. The present invention seeks to reduce the delay due to the MCCH modification period in the prior art.

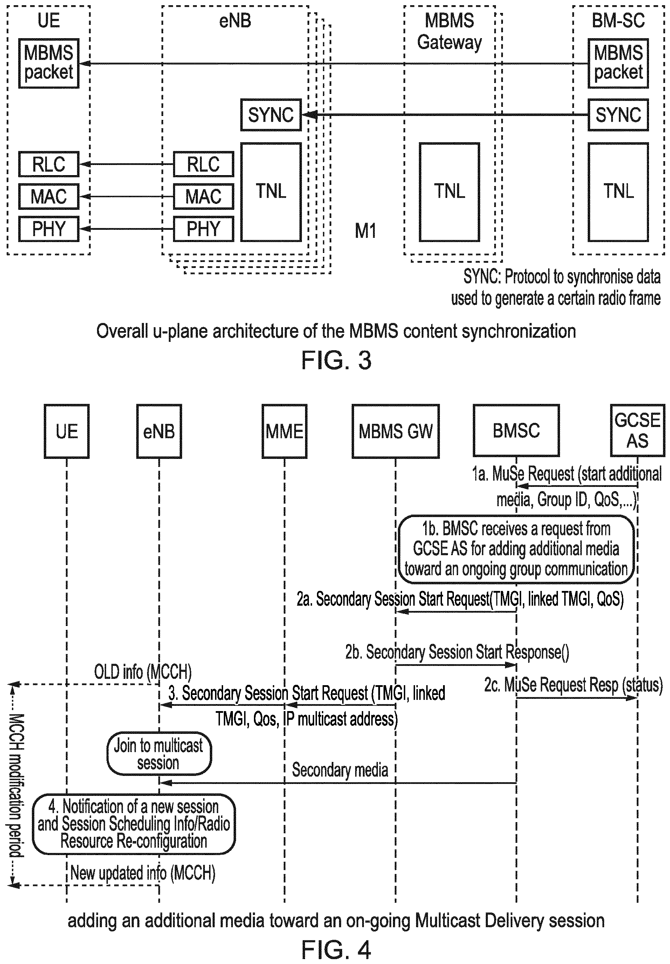

The MBMS of the prior art transmits control and user plane traffic separately. Figure 1 shows two example MBMS system architecture one with centralized and one with distributed MCE. Figures 2 and 3 illustrate the control plane and user plane protocol stack used in the MBMS transmission respectively. Bearer setup information is transmitted over the control plane protocol stack. The eNB generates the MCCH control channel (at RRC) based on the information received from the MCE. Details of the transmission of MCCH are informed to the UE via BCCH broadcast control channels in system information blocks (SIB13/SIB2). The MCCH control channel is generated by the eNBs involved in the MBMS transmission following a set of rules therefore, an identical data and waveform is generated by all the eNBs involved in the MBMS transmission.

User plane traffic is delivered from the broadcasting service centre BM-SC to the eNB via MBMS Gateway 25. SYNC protocol is designed to provide necessary information to guarantee synchronous delivery of the user data from eNBs involved in the MBMS transmission which enables the waveform to interfere constructively or combine over the air for a set of cells within a MBSFN. Legacy MBMS transmission therefore provide the identical waveform generation for control plane data and user plane data separately.

However, when control information is to be multiplexed with user plane traffic, the waveform generation needs to be carefully designed to provide the identical waveform generation. The legacy MBMS system doesn't support multiplexing of control pane traffic with user plane traffic.

A mechanism has therefore been designed to enable identical or at least near identical waveform generation when multiplexing of control and user plane traffic as a way to overcome the delay introduced by the MCCH modification period for addition of new media to an ongoing group communication.

There is no mechanism currently available for providing identical waveform generated by eNBs involved in the MBMS transmission when control and user plane data is multiplexed for the transmission over the radio interface. It would be desirable to provide a mechanism for multiplexing control and user traffic such that the resulted waveforms generated by different eNBs are identical.

Embodiments of the present invention provide from the network control node; that is, the core network node such as the MME (mobility management entity), both the control data for the new transmission and an indicator indicating where in the multiplexed data stream it should be inserted. This information may make use of the synchronising periods provided in such a data stream and indicate the location with respect to one of these. Thus, if for example a public safety transmission to a group of users is currently using a channel configured for voice communication, this channel can be used to indicate the new channel that is to be used for the new service, sending say video data to the users of the public safety transmission. Thus, the indicator indicates a synchronisation point and the base station will transmit the control data in the frame that is reserved for the transmission of that channel after that synchronisation point, along with the data for that channel.

The multiplexing of the control and user traffic in some embodiments comprises:
1) Control traffic corresponding to a MBMS service while user traffic corresponding to same or another MBMS service;
2) Multiplexed traffic is delivered using data transport channel (MTCH) over the air interface;
3) Sufficient information for generation of identical waveform is provided to the eNB, the information contains the time for the inclusion of the control plane traffic, and in some cases the size of the control plane traffic;
4) The format for the multiplexed control plane traffic transmission may also be provided over the air interface.

Figure 1 schematically illustrates reference architecture for an evolved packet system with the Evolved Universal Terrestrial Radio Access Network (E-UTRAN). This architecture is used to send both the legacy MBMS transmissions and the transmissions according to an embodiment of the present invention. As can be seen from Figure 1, a content provider 10 provides a broadcast multimedia service centre (BM-SC) with service data to be transmitted to members or subscribers of a user group. The BM-SC typically performs encryption of the content to be routed to group users. The BM-SC provides an MBMS gateway 25 with control and traffic signalling and the MBMS gateway is operable to provide traffic and control signalling to the E-UTRAN and mobility management entity (MME) 20 respectively. When performing MBMS communication, the E-UTRAN includes a multi cast entity (MCE) coordinator 30.

The BM-SC is the primary controller for the MBMS transmission. The control signalling for a MBMS session is delivered from BM-SC to E-UTRAN via MME over the M3 interface. Multi-cell multicast coordination entity, MCE, is located at the E-UTRAN 40 in this embodiment and is in charge of control of MBMS delivery. Session start message, session update message and session stop message are transmitted from BM-SC to the MCE30 for each MBMS session. MCE 30 performs the radio resource configuration, scheduling of the MBMS sessions, generation of MCCH (multicast control channel) conveying the MBMS control information over the radio interface and also allocation retention priority based on the associated priority information of the MRB (MBMS radio bearer) carrying the traffic. MCE 30 can either be centralized or distributed as shown in figure 1. The user plane traffic (i.e. MBMS service traffic) is delivered from the BM-SC to the transmitting eNBs via MBMS gateway.

In an embodiment of the present invention, content provider 10 of Figure 1 provides encrypted content to a multimedia broadcast multicast service (MBMS) which distributes the contents via an MBMS gateway 25 to base stations 40. The gateway also sends control signals to the core network node or MME 20. In an embodiment of the invention, the MBMS gateway 25, in addition to providing content from the content provider 20, can also control safety communications. In this regard, the control signals that it sends to the network control node 20 provide synchronising information to synchronise the data signals transmitted from the base stations 40, such that the base stations within a single network frequency band group all transmit the same signal on a particular transmission channel at the same time.

This synchronising information includes the transmission of scheduling information at predetermined periods. This scheduling information is used to synchronise the signal and can be used if control data is to be multiplexed into the data stream to determine at what point the control data should be added to the stream such that all the base stations multiplex the same control data at the same time. Thus, even where the MBMS gateway 25 is not transmitting content from the content provider 20 but is transmitting a voice communication from a user equipment to a plurality of base stations for broadcast of further groups, the synchronisation of this signal and control data associated with it can be synchronised using a multicast coordinating entity 30 which may be associated with the control node 20 or on each of the base stations 40. This controls the transmission of the scheduling data and will control the multiplexing of the control data into the data stream at the appropriate points.

In this regard, where there is a current service being provided on a transmission channel by each of the base stations, perhaps a voice communication to a plurality of users, and the media that is being transmitted is desired to be changed such that a video can be sent instead of the voice communication then the MBMS gateway 25 will transmit information allocating a new transmission channel to this new media communication, along with control data indicating the format and frequency of this new channel. This control data is appended to the user data that is currently being sent to the user equipment receiving the voice communication. An indication of where the control data is to be appended to the signal is supplied by the MCE 30, thereby allowing each of the base stations to provide it in the same place, allowing the signals to remain identical. The user equipment receiving the user data on the voice channel will identify the control data and from it will determine that a new channel is to be used to send new media. It will then decode that new media and can receive the video data.

Figure 2 shows the control plane and how such signals can be transmitted.

Figure 3 shows the user plane and illustrates how the synchronisation signal is sent from the broadcast media service centre BM-SC to the base station.

The MBMS Control plane protocol architecture is shown in Figure 2. MCCH is terminated in the eNB on the network side. The synchronized radio interface transmission from the cells controlled by different eNBs ensures that the addition of a new control signal is added at the same modification period border in each cell belonging to the same MBSFN Area. The MCE and the concerned eNBs maintain a common time reference which allows each node to be aware of the modification period boundary within an MBSFN Area.

The overall User plane protocol architecture and content synchronization is shown in Figure 3. This architecture is based on the protocol architecture for Unicast transmission to a single user, where RLC, MAC and PHYlayers are used for data processing and formatting for the transmission over the radio interface. In addition, the SYNC protocol layer is defined on transport network layer to support content synchronization mechanism. The SYNC protocol is defined as a protocol to carry additional information that enable eNBs to identify the timing for radio frame transmission and detect packet loss. Every MBMS service uses its own SYNC entity. The SYNC protocol is applicable to DL and is placed at the BM-SC and eNB.

The protocol layers used for the control and user plane MBMS traffic transmission guarantees the synchronized radio interface transmission from different eNBs involved in the MBMS service support.

When a group communication service requires different media type (e.g., voice and video) for the same Group Communication, a different MBMS service is allocated for each media type. Each of the MBMS service can have different QoS and bit rate requirements. However, they are linked to the same group communication and can be independently removed at any time by the GCSE AS. The UE which has registered to this Group Communication will be given all the TMGI(s) and their corresponding media type via e.g. Application layer signalling; hence the UE can determine if certain MBMS service can be ignored.

The procedure could have the following steps:
1. GCSE AS determines that a multimedia service for a particular Group Communication will consist of more than one MBMS service in order to carry different media type.
2. GCSE AS provides the QoS/bit-rate requirements for each MBMS service separately based on the requirement of the media type to be carried in each MBMS service. Each Multicast Delivery session has its own TMGI which will be indicated to GCSE AS.
3. When UE registers to GCSE AS for this Group Communication, the GCSE AS informs the UE of all the related TMGIs and their associated component type. UE can then decide which TMGIs to monitor from the serving cell. It means that the UE can choose which MBMS service it wants to be a part of within the Group Communication.
4. If a particular MBMS service for a group communication is no longer needed, GCSE AS can make the decision to remove the MBMS service from the group communication based on e.g., input from the group member and/or administrator who oversees this group communication.

The above procedure can introduce delay toward the receiving group member who is using MBMS because the UE relies upon acquiring the information about the newly added media component from the MCCH. The MCCH can only be modified once every 5 or 10 seconds dependent upon the MBMS configuration according to the current specification (the rate of MCCH repetition is configurable between 320 ms and 2560 ms, see TS 36.331). This means that reception of the newly added component (e.g., video toward an existing voice group session) will be delayed until UE is able to decode the MCCH and acquires its radio configuration. The following new procedure shown in figure 4 was introduced to allow the eNB to directly inform the current participating UEs of the MBMS radio configuration necessary to receive the newly added media; thus, eliminating any delays that are due to the UE relying upon changes to the MCCH and the constraints of the MCCH modification period.
1. BM-SC receives a request from a GCSE AS for adding a media (e.g. video) on the existing group communication. BM-SC creates secondary MBMS session with the MBMS-GW. It allocates a new TMGI for the new session and also identifies the current active MBMS session by its TMGI which is referred to as "linked TMGI".
2. BMSC creates a secondary MBMS session toward the MBMS-GW.
3. The MBMS-GW sends a secondary session request (TMGI, linked TMGI, QoS, IP multicast address for the new secondary MBMS session,) to the eNB that is serving the current active MBMS session. The eNB joins the multicast session for secondary MBMS session and starts receiving the new media.
4. It is assumed that UEs which are participating in a group communication via MBMS are always in RRC connected state. When eNB is aware of the secondary session due to step 3, eNB notifies each of those UEs via RRC signalling with the new radio related configuration of the secondary MBMS session (i.e., for the new media) such that UE can immediately start receiving the additional media via Multicast Delivery mechanism. The eNB identifies the relevant UEs based on its internal stored context from the ongoing active session (i.e., UE and TMGI correlation).

Embodiments of the invention provide a method and procedure for multiplexing MBMS control information with user plane traffic for transmission over a radio interface.

The procedure above is only applicable to the RRC_Connected UEs. However, the UE receiving MBMS can either be in RRC_Idle or RRC_Connected. In order to support RRC_Idle UEs as well as the RRC_Connected UEs, the radio configuration information for the new media should be provided to the Ues via MBMS channels.

A link TMGI (temporary mobile group identity that identifies a bearer service) is introduced to indicate which ongoing service is linked to the newly added media. In this regard, there are TMGIs for existing services, and this procedure only provides a linking to one ongoing service. In order to enhance the MBMS scheduling flexibility, the group id is proposed to indicate which services belong to a particular group communication. The linked TMGI can be replaced with a group communication identity in the procedure.

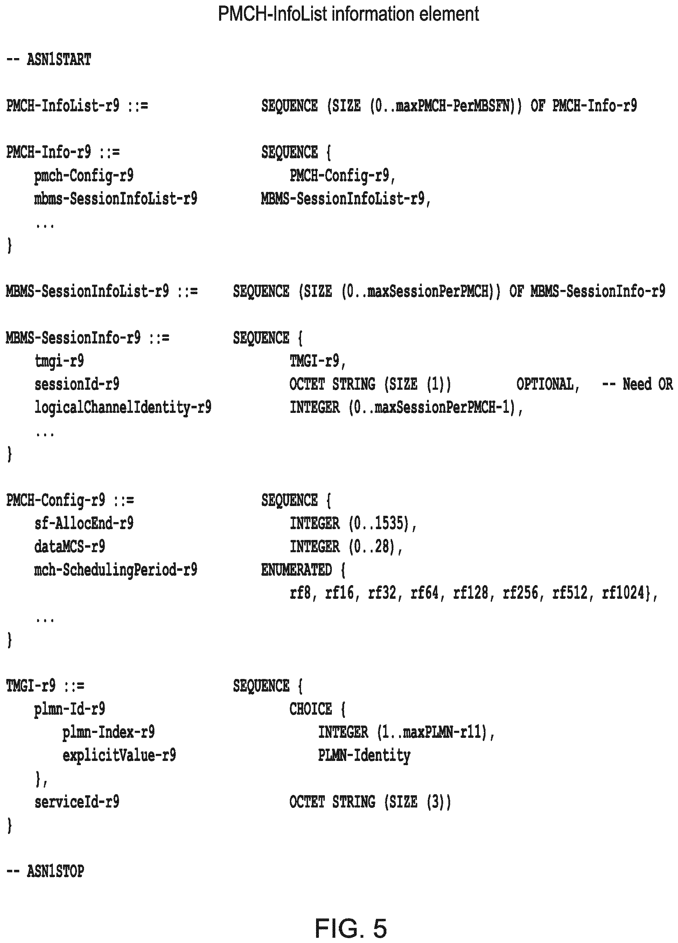

Based on the signalling from BM-SC, EUTRAN (MCE and eNB) is aware of which services belong to a particular group communication. EUTRAN configures the MBMS radio bearer for the newly added service. The MRB (MBMS radio bearer) information contains PMCH (physical channel) configurations and MBMS session configuration which are carried over the PMCH-InfoList IE in MCCH. PMCH-InfoList IE is shown in figure 5 for reference.

If the newly added service is delivered using an existing PMCH, the only additional configuration parameter for the MRB is that allocation of logicalChannelIdentity for the newly added service. The bearer parameters for the newly added service could for example take the form TMGI -> PMCH info index and Logicalchannelidentity.

In case the existing PMCH cannot be used for the newly added service, the PMCH configuration should also be informed to the UE.

In either case whether existing PMCH is used or not, the relevant bearer information for the newly added service can be multiplexed with user plane traffic of an ongoing service belonging to the same group communication. In order to guarantee that the same waveform is generated by all the eNBs involved in the MBMS transmission, the location of control information for the newly added service and preferably the format of the control information should be specified.

### Synchronisation of the location of control information

Each node (eNBs and MCE) maintains a counter of MSP (MBMS scheduling period) which is incremented by one at each modification period boundary. Note that the MSP is transmitted on MTCH together with user plane traffic and has shorter periodicity (eg: 80ms) than that of MCCH updates. In addition each node maintains a counter for MCCH modification boundary. The MCCH modification counter is based on common start of the first MCCH modification period. Upon reception of information regarding the newly added media for the group communication, the MCE indicates to the eNBs at which MSP the bearer information for newly added media should be transmitted to the UE multiplexed with ongoing MBMS service (e.g. linked TMGI). The time is indicated with reference to the MCCH modification period and MSP counter. Thus the MCCH modification counter and MSP counters are maintained at the respective eNBs and MCE allow the time synchronization of the control information multiplexing with the user plane traffic. The MCE shall ensure that it starts to inform all eNBs within the MBSFN Area well in advance of the change being required.

In addition to the control information transmitted to the UE multiplexed with the user traffic, bearer configuration is also transmitted to the UE in MCCH following the legacy procedure. The multiplexed control information with user traffic allows the UE to start receiving the newly added service early.

### Synchronization of the content of control information

The control information is transmitted at the beginning of the scheduled user traffic transmission for the indicated MSP and linked TMGI.

MCE decides whether to use existing PMCH configuration and or logical channel identity for the newly added service. MCE's decision is forwarded to the corresponding eNBs. Therefore, all eNBs receive the same control information to be multiplexed with the user traffic.

The control information can either be designed to be fixed size or variable size. In case of fixed size, the size is hardcoded in the standards. Otherwise the size is indicated together with the control information. The size of control information can be implicit or explicitly signalled to the corresponding eNBs from the MCE.

### Format of the multiplexed control and user plane traffic

A flag is used to indicate the data carriers multiplexed control and user traffic. For example a 1 bit flag located at the beginning of the user traffic is sufficient to indicate the arrival of the multiplexed control and user traffic. The control data is located before the user traffic. The end of control traffic is indicated by the size information. The multiplexing of control and user traffic could be performed at the RLC or Mac layer. At the receiver, either RLC or MAC (depending on the formatting) process the control data and forwards the process data to the RRC at the UE.

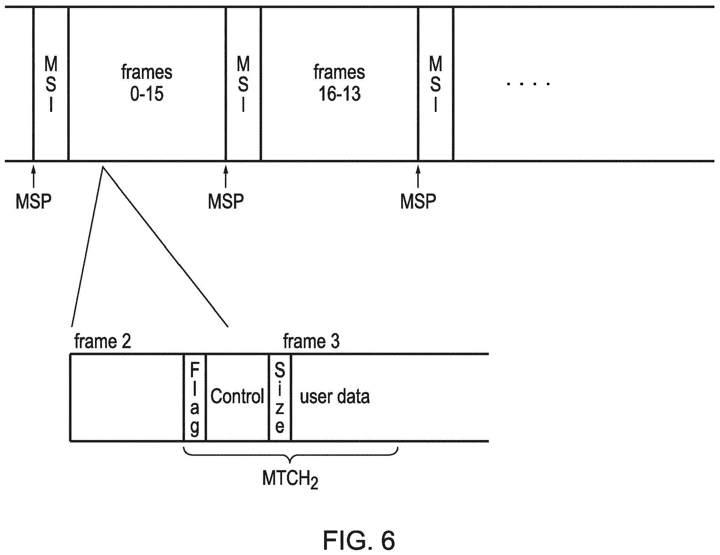

Figure 6 schematically shows a signal that is transmitted from the plurality of base stations. As can be seen, at a certain period MSP an MSI scheduling indicator is transmitted and this will indicate the locations of the different transmission channels within the signal. User equipment receiving this signal will have a data store linking transmission channels to group identities and corresponding media type. When a user equipment registers for a particular service then it will receive the group identity of that service and will monitor the appropriate channels indicated by the data store. The scheduling information MSI will provide it with information as to where these channels are to be found in the signal transmitted from the base stations.

Some of the frames or sub-frames will be allocated to the MBMS services and for these frames or sub-frames all of the base stations within the group will transmit substantially the same signal at substantially the same time. Where an emergency service voice control is transmitted on transmission channel MTCH2 to group TMG2 for example and the user of this service wishes to send a video, then in one embodiment a new channel MTCH3 will be allocated to this service and it will be provided with a different group identity TMG3 that will be linked to group TMG2. Alternatively, a new group comprising both services can be created.

The control data indicating the information regarding this new channel, such as the bearer signal and its configuration, will be transmitted as control data on the channel MTCH2 which currently transmits the voice signal. In this embodiment the scheduling information indicates that the MTCH2 channel is transmitted in frame 3. A flag is set at the start of the frame indicating that control data is contained along with the user data. The control data is located next followed by an indication of the size of that control data. The user data for the voice service is then provided. In this way, the control data will be received by the plurality of users that receive the voice signal. Furthermore, the data is sent in the same way to each of the user equipment and, thus, there is constructive interference between the signal received by the different user equipment from the different base stations.

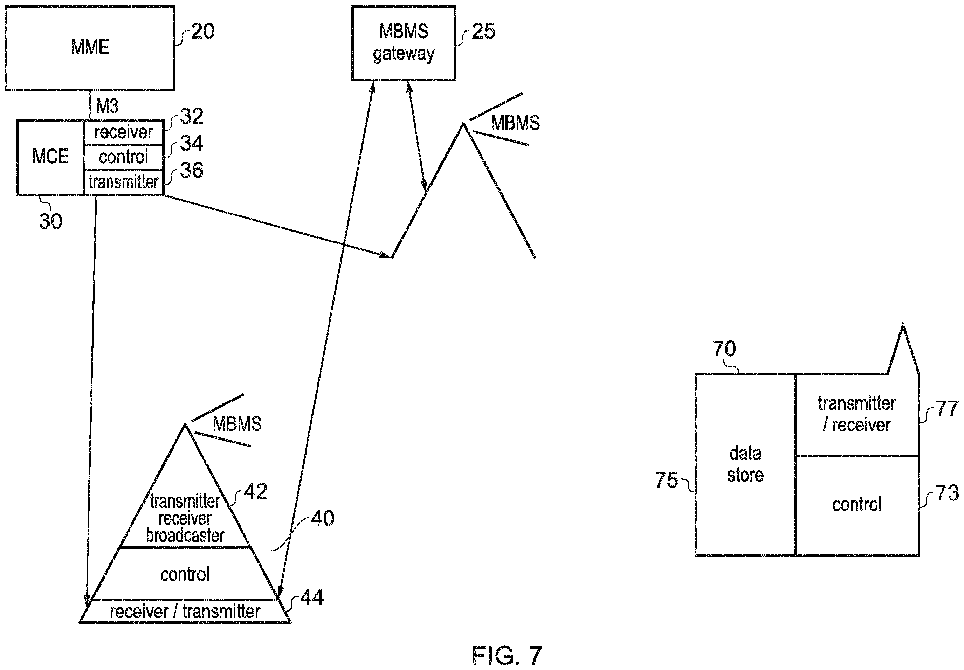

Figure 7 shows a wireless communication network having a plurality of base stations 40 within a MBSFN area which transmit the same MBMS signal at the same time. They are controlled by a network control node 20 which comprises a synchronising or coordinating entity MCE 30, having a receiver 32 for receiving signals from the network control node 20, control circuitry 34 and a transmitter 36 for transmitting to the various base stations 40 within the MBSFN area control information for controlling the transmission of content or user data that the base stations receive from an MBMS gateway 25. Where there is to be a change in a service provided to a group of user equipment 70 or a new service to be provided, then control information regarding this is transmitted from MCE 30 to the various base stations along with information on where in the MBMS signal transmitted by these base stations it should be inserted. This indication may take the form of an indication of a synchronisation point in the signal transmitted by the base stations, 40. The base stations will then add the control data to the user data of the linked existing service that is transmitted after this synchronisation point.

User equipment 70 receives and transmits signals to the base stations 40. User equipment 70 has a data store 75 for storing TMGI information identifying a group and corresponding media type. When the user equipment 70 receives control data indicating the channel that a signal for a certain TGMI will be transmitted on, this information is also stored in data store 75. User equipment also has control circuitry 73 for controlling the channels it monitors and transmits on and transmitter/receiver circuitry 77.

The base stations 40 have transmitter/receiver and broadcasting circuitry 42 for transmitting and receiving wireless signals. They may also have transmitter/receiver circuitry 44 for receiving signals over a wired connection. In this regard signals from the MME 20 and MBMS gateway 25 may in some embodiments be sent via a wired link, while in others they may be sent wirelessly. Base station 40 also has control circuitry which responds to information sent by the MCE and controls the insertion of control data into the signal that it transmits to the user equipment 70.

A person of skill in the art would readily recognize that steps of various above-described methods can be performed by programmed computers. Herein, some embodiments are also intended to cover program storage devices, e.g. digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed at a synchronising entity of synchronising the broadcasting of data by multiple base stations to groups of multiple users via a wireless communication network such that the same data is broadcast at substantially the same time by each of said multiple base stations such that a user equipment receiving the same signal from multiple base stations can make use of the multiple same signals when decoding, comprising:
receiving from a network control node information regarding a change in service to be provided to a first group of multiple users receiving an existing service from a multimedia broadcast multicast gateway;
transmitting control data regarding said change in service to said multiple base stations along with an indicator of where in a multiplexed data stream, comprising said existing service, said control data should be inserted; wherein
said control data comprises radio bearer information indicating a traffic channel for transmitting user data of a new service and configuration information for transmission of said user data.

2. A method according to claim 1, wherein said change in service comprises providing said new service to said group of multiple users.

3. A method according to any preceding claim, wherein said existing service is transmitted on a first transmission channel and said control data is transmitted on said first transmission channel appended to user data of said existing service.

4. A method according to any preceding claim, wherein said multiplexed data stream comprises a multiplexed stream of different traffic channels each transmitting different user data, said multiplexed stream comprising a plurality of scheduling information blocks MSIs transmitted with a predetermined periodicity once every predetermined scheduling time period MSP, said indicator indicating where with respect to said predetermined scheduling time period said control data is to be transmitted.

5. A method according to any preceding claim, said method further comprising transmitting a format of said control data along with said indicator.

6. A synchronising entity (30) for the broadcasting of data by multiple base stations (40) to groups of multiple users (70) via a wireless communication network such that the same data is broadcast at substantially the same time by each of said multiple base stations (40), stations such that a user equipment receiving the same signal from multiple base stations can make use of the multiple same signals when decoding, comprising:
receiving circuitry (32) configured to receive information from a network control node (20) regarding a change in service to be provided to a first group of multiple users receiving an existing service from a multimedia broadcast multicast gateway;
control logic (34) configured to generate an indicator indicating where in a multiplexed data stream comprising said existing service control data regarding said change in service should be inserted ;
a transmitter (36) configured to transmit said control data regarding said change in service to said multiple base stations along with an indicator of where in a multiplexed data stream, comprising said existing service, said control data should be inserted; wherein
said control data comprises radio bearer information indicating a traffic channel for transmitting user data of a new service and configuration information for transmission of said user data.

7. A method of broadcasting of data to a group of multiple users via a wireless communication network by a base station, comprising:
receiving at least one stream of user data to be provided as an existing service from a multimedia broadcast multicast gateway to a first group of multiple users;
receiving from a network control node information regarding a change in service to be provided to said first group of multiple users and **characterized by** receiving an indicator indicating where in a multiplexed data stream comprising said existing service, control data indicating said change in service should be inserted;
inserting said control data into said multiplexed data stream at said location indicated by said indicator such that said control data is received by said first group of users; wherein
said control data comprises radio bearer information indicating a traffic channel for transmitting user data of a new service and configuration information for transmission of said user data; and
broadcasting said multiplexed data stream.

8. A method according to claim 7, comprising transmitting said existing service on a first transmission channel and transmitting said control data on said first transmission channel appended to user data of said existing service.

9. A method according to claim 7 or 8, comprising inserting a flag into said multiplexed data stream said flag indicating that said multiplexed data stream comprises said control data.

10. A method according to claim 9, said multiplexed data stream comprises a multiplexed stream of different transmission channels, said existing service being transmitted on a first transmission channel and said flag being located prior to user data transmitted on said first transmission channel.

11. A base station (40) configured to broadcast data to a group of multiple users via a wireless communication network, comprising:
a receiver (42, 44) configured to receive at least one stream of user data from a multimedia broadcast multicast gateway (25), said user data to be provided as an existing service to a first group of multiple users and to receive from a network control node (20) information regarding a change in service to be provided to said first group of multiple users and and **characterized in that** the receiver is further configured to receive an indicator indicating where in a multiplexed data stream comprising said existing service, control data indicating said change in service should be inserted;
control logic configured to insert said control data into said multiplexed data stream at said location indicated by said indicator such that said control data is received by said first group of users; wherein
said control data comprises radio bearer information indicating a traffic channel for transmitting user data of a new service and configuration information for transmission of said user data.

12. A method of receiving a broadcast multiplexed data stream at a user equipment said data stream comprising a multiplexed stream of different transmission channels each transmitting different user data, said multiplexed stream comprising a plurality of scheduling information blocks MSIs transmitted with a predetermined periodicity once every predetermined scheduling time period MSP;
said user equipment comprising a data store for storing at least one transmission group identity and associated transmission channel, said user equipment being configured to monitor at least one transmission channel associated with at least one predetermined group identity; said method comprising
receiving said transmission channel of said predetermined group identity; detecting control data associated with user data on said received transmission channel, said control data comprising radio bearer information indicating a traffic channel for transmitting user data of a new service and configuration information for transmission of said user data;
determining a change in an existing service from said control data; monitoring for said changed service.

13. A user equipment configured to receive a broadcast multiplexed data stream, said data stream comprising a multiplexed stream of different transmission channels each transmitting different user data, said multiplexed stream comprising a plurality of scheduling information blocks MSIs transmitted with a predetermined periodicity once every predetermined scheduling time period MSP;
said user equipment (70) comprising a data store (75) for storing at least one transmission group identity and associated transmission channel, said user equipment being configured to monitor at least one transmission channel associated with at least one predetermined group identity;
a receiver (77) configured to receive said transmission channel of said predetermined group identity;
control logic (73) configured to detect control data associated with user data on said received transmission channel and to determine a change in an existing service from said control data and to control said receiver to monitor for said changed service; wherein
said control data comprises radio bearer information indicating a traffic channel for transmitting user data of a new service and configuration information for transmission of said user data.

14. A computer program which when executed by a data processing apparatus controls said data processing apparatus to performs a method according to any one of claims 1 to 5, 7 to 10 or 12.

## Patentansprüche

1. Verfahren, das bei einer Synchronisationseinheit durchgeführt wird, zum Synchronisieren des Sendens von Daten durch mehrere Basisstationen an Gruppen von mehreren Benutzern über ein drahtloses Kommunikationsnetzwerk, sodass die gleichen Daten im Wesentlichen zur gleichen Zeit von jeder der besagten mehreren Basisstationen gesendet werden, sodass ein Teilnehmergerät, welches das gleiche Signal von mehreren Basisstationen empfängt, beim Dekodieren die mehreren gleichen Signale verwenden kann, umfassend:
Empfangen von Information von einem Netzwerksteuerungsknoten betreffend eine Dienständerung, die einer ersten Gruppe von mehreren Benutzern bereitzustellen ist, welche einen bestehenden Dienst von einem Multimedia Broadcast Multicast Gateway empfangen;
Übertragen von Steuerungsdaten betreffend besagte Dienständerung an besagte mehrere Basisstationen zusammen mit einem Indikator dafür, wo in einem Multiplexdatenstrom, der besagten bestehenden Dienst umfasst, besagte Steuerungsdaten eingefügt werden sollen; wobei
besagte Steuerungsdaten Funkträgerinformation umfassen, welche einen Verkehrskanal zum Übertragen von Nutzdaten eines neuen Dienstes und Konfigurationsinformation für die Übertragung von besagten Nutzdaten anzeigt.

2. Verfahren nach Anspruch 1, wobei besagte Dienständerung das Bereitstellen von besagtem neuen Dienst an besagte Gruppe von mehreren Benutzern umfasst.

3. Verfahren nach einem beliebigen der vorstehenden Ansprüche, wobei besagter bestehender Dienst über einen ersten Übertragungskanal übertragen wird und besagte Steuerungsdaten über besagten ersten Übertragungskanal übertragen werden, der mit den Nutzdaten von besagtem bestehenden Dienst verbunden ist.

4. Verfahren nach einem beliebigen der vorstehenden Ansprüche, wobei besagter Multiplexdatenstrom einen Multiplexstrom verschiedener Verkehrskanäle umfasst, die jeweils verschiedene Nutzdaten umfassen, wobei der Multiplexstrom eine Vielzahl von Schedulinginformationsblöcken, MSIs, umfasst, welche mit einer vorbestimmten Periodizität einmal pro vorbestimmtem Schedulingzeitraum, MSP, übertragen werden, wobei besagter Indikator anzeigt, wo in Bezug auf besagten vorbestimmten Schedulingzeitraum besagte Steuerungsdaten zu übertragen sind.

5. Verfahren nach einem beliebigen der vorstehenden Ansprüche, wobei das Verfahren weiter das Übertragen eines Formates von besagten Steuerungsdaten zusammen mit besagtem Indikator umfasst.

6. Synchronisationseinheit (30) zum Senden von Daten durch mehrere Basisstationen (40) an Gruppen von mehreren Benutzern (70) über ein drahtloses Kommunikationsnetzwerk, sodass die gleichen Daten im Wesentlichen zur gleichen Zeit von jeder der besagten mehreren Basisstationen (40) gesendet werden, sodass ein Teilnehmergerät, welches das gleiche Signal von mehreren Basisstationen empfängt, beim Dekodieren die mehreren gleichen Signale verwenden kann, umfassend:
Empfangen von Schaltkreisen (32), die konfiguriert sind zum Empfangen von Information von einem Netzwerksteuerungsknoten (20) betreffend eine Dienständerung, die einer ersten Gruppe von mehreren Benutzern bereitzustellen ist, welche einen bestehenden Dienst von einem Multimedia Broadcast Multicast Gateway empfangen;
Steuerlogik (34), konfiguriert zum Erzeugen eines Indikators, der anzeigt, wo in einem Multiplexdatenstrom, der besagte bestehende Dienststeuerungsdaten umfasst, besagte Dienständerung eingefügt werden soll;
einen Sender (36), konfiguriert zum Übertragen von besagten Steuerungsdaten betreffend besagte Dienständerung an besagte mehrere Basisstationen zusammen mit einem Indikator dafür, wo in einem Multiplexdatenstrom, der besagten bestehenden Dienst umfasst, besagte Steuerungsdaten eingefügt werden sollen; wobei
besagte Steuerungsdaten Funkträgerinformation umfassen, welche einen Verkehrskanal zum Übertragen von Nutzdaten eines neuen Dienstes und Konfigurationsinformation für die Übertragung von besagten Nutzdaten anzeigt.

7. Verfahren zum Senden von Daten an eine Gruppe von mehreren Benutzern über ein drahtloses Kommunikationsnetzwerk durch eine Basisstation, umfassend:
Empfangen von mindestens einem Strom von Nutzdaten, der als ein bestehender Dienst von einem Multimedia Broadcast Multicast Gateway einer ersten Gruppe von mehreren Benutzern bereitzustellen ist;
Empfangen von Information von einem Netzwerksteuerungsknoten betreffend eine Dienständerung, die besagter ersten Gruppe von mehreren Benutzern bereitzustellen ist, und durch das Empfangen eines Indikators gekennzeichnet ist, der anzeigt, wo in einem Multiplexdatenstrom, der besagten bestehenden Dienst umfasst, Steuerungsdaten eingefügt werden sollen, die besagte Dienständerung anzeigen;
Einfügen von besagten Steuerungsdaten in besagten Multiplexdatenstrom an besagter Position, die durch besagten Indikator angezeigt wird, sodass besagte Steuerungsdaten von besagter ersten Gruppe von Benutzern empfangen werden; wobei
besagte Steuerungsdaten Funkträgerinformation umfassen, welche einen Verkehrskanal zum Übertragen von Nutzdaten eines neuen Dienstes und Konfigurationsinformation für die Übertragung von besagten Nutzdaten anzeigt; und
Senden von besagtem Multiplexdatenstrom.

8. Verfahren nach Anspruch 7, umfassend das Übertragen von besagtem bestehenden Dienst über einen ersten Übertragungskanal und das Übertragen von besagten Steuerungsdaten über besagten ersten Übertragungskanal, der mit den Nutzdaten von besagtem bestehenden Dienst verbunden ist.

9. Verfahren nach Anspruch 7 oder 8, umfassend das Einsetzen eines Flags in besagten Multiplexdatenstrom, wobei besagtes Flag anzeigt, dass besagter Multiplexdatenstrom besagte Steuerungsdaten umfasst.

10. Verfahren nach Anspruch 9, wobei besagter Multiplexdatenstrom einen Multiplexstrom von verschiedenen Übertragungskanälen umfasst, wobei besagter bestehender Dienst übertragen wird über einen ersten Übertragungskanal und sich besagtes Flag vor den Nutzdaten befindet, die über besagten ersten Übertragungskanal übertragen werden.

11. Basisstation (40), konfiguriert zum Senden von Daten an eine Gruppe von mehreren Benutzern über ein drahtloses Kommunikationsnetzwerk, umfassend:
einen Empfänger (42, 44), konfiguriert zum Empfangen von mindestens einem Strom von Nutzdaten von einem Multimedia Broadcast Multicast Gateway (25), wobei besagte Nutzdaten als ein bestehender Dienst einer ersten Gruppe von mehreren Benutzern bereitzustellen sind, und zum Empfangen von Information von einem Netzwerksteuerungsknoten (20) betreffend eine Dienständerung, die besagter ersten Gruppe von mehreren Benutzern bereitzustellen ist, und **dadurch gekennzeichnet ist, dass** der Empfänger weiter konfiguriert ist zum Empfangen eines Indikators, der anzeigt, wo in einem Multiplexdatenstrom, der besagten bestehenden Dienst umfasst, Steuerungsdaten eingefügt werden sollen, die besagte Dienständerung anzeigen;
Steuerlogik, konfiguriert zum Einfügen von besagten Steuerungsdaten in besagten Multiplexdatenstrom an besagter Position, die durch besagten Indikator angezeigt wird, sodass besagte Steuerungsdaten von besagter ersten Gruppe von Benutzern empfangen werden; wobei
besagte Steuerungsdaten Funkträgerinformation umfassen, welche einen Verkehrskanal zum Übertragen von Nutzdaten eines neuen Dienstes und Konfigurationsinformation für die Übertragung von besagten Nutzdaten anzeigt.

12. Verfahren zum Empfangen eines gesendeten Multiplexdatenstroms an ein Teilnehmergerät, wobei besagter Datenstrom einen Multiplexstrom von verschiedenen Übertragungskanälen umfasst, die jeweils verschiedene Nutzdaten übertragen, wobei besagter Multiplexstrom eine Vielzahl von Schedulinginformationsblöcken, MSIs, umfasst, welche mit einer vorbestimmten Periodizität einmal pro vorbestimmtem Schedulingzeitraum, MSP, übertragen werden;
wobei besagtes Teilnehmergerät einen Datenspeicher zum Speichern von mindestens einer Übertragungsgruppenidentität und eines zugehörigen Übertragungskanals umfasst, wobei besagtes Teilnehmergerät konfiguriert ist zum Überwachen von mindestens einem Übertragungskanal, der mindestens zu einer vorbestimmten Gruppenidentität zugehörig ist; wobei besagtes Verfahren umfasst:
Empfangen von besagtem Übertragungskanal von besagter vorbestimmten Gruppenidentität;
Erkennen von Steuerungsdaten, die zugehörig sind zu den Nutzdaten auf besagtem empfangenen Übertragungskanal, wobei besagte Steuerungsdaten Funkträgerinformation umfassen, welche einen Verkehrskanal zum Übertragen von Nutzdaten eines neuen Dienstes und Konfigurationsinformation für die Übertragung von besagten Nutzdaten anzeigt;
Bestimmen einer Änderung in einem bestehenden Dienst von besagten Steuerungsdaten;
Überwachen von besagtem geänderten Dienst.

13. Teilnehmergerät, konfiguriert zum Empfangen eines gesendeten Multiplexdatenstroms, wobei besagter Datenstrom einen Multiplexstrom von verschiedenen Übertragungskanälen umfasst, die jeweils verschiedene Nutzdaten übertragen, wobei besagter Multiplexstrom eine Vielzahl von Schedulinginformationsblöcken, MSIs, umfasst, welche mit einer vorbestimmten Periodizität einmal pro vorbestimmtem Schedulingzeitraum, MSP, übertragen werden;
wobei besagtes Teilnehmergerät (70) einen Datenspeicher (75) zum Speichern von mindestens einer Übertragungsgruppenidentität und eines zugehörigen Übertragungskanals umfasst, wobei besagtes Teilnehmergerät konfiguriert ist zum Überwachen von mindestens einem Übertragungskanal, der mindestens zu einer vorbestimmten Gruppenidentität zugehörig ist;
einen Empfänger (77), konfiguriert zum Empfangen des besagten Übertragungskanals von besagter vorbestimmter Gruppenidentität;
Steuerlogik (73), konfiguriert zum Erkennen von Steuerungsdaten, die zugehörig sind zu den Nutzdaten auf besagtem empfangenen Übertragungskanal und zum Bestimmen einer Änderung in einem bestehenden Dienst von besagten Steuerungsdaten und zum Steuern von besagtem Empfänger zum Überwachen von besagtem geänderten Dienst; wobei
besagte Steuerungsdaten Funkträgerinformation umfassen, welche einen Verkehrskanal zum Übertragen von Nutzdaten eines neuen Dienstes und Konfigurationsinformation für die Übertragung von besagten Nutzdaten anzeigt.

14. Computerprogramm, welches, wenn es von einer Datenverarbeitungsvorrichtung ausgeführt wird, besagte Datenverarbeitungsvorrichtung steuert, um ein Verfahren nach einem der Ansprüche 1 bis 5, 7 bis 10 oder 12 auszuführen.

## Revendications

1. Procédé exécuté au niveau d'une entité de synchronisation destinée à synchroniser la diffusion de données par des stations de base multiples vers des groupes d'utilisateurs multiples par l'intermédiaire d'un réseau de communication sans fil de sorte que les mêmes données soient diffusées sensiblement au même moment par chacune desdites stations de base multiples de sorte qu'un équipement utilisateur recevant le même signal provenant de stations de base multiples puisse utiliser les mêmes signaux multiples au moment du décodage, comprenant les étapes suivantes :
recevoir à partir d'un noeud de commande de réseau des informations concernant un changement de service à fournir à un premier groupe d'utilisateurs multiples recevant un service existant provenant d'une passerelle de diffusion/multidiffusion multimédia ;
transmettre des données de commande concernant ledit changement de service auxdites stations de base multiples avec un indicateur de l'emplacement où, dans un flux de données multiplexées comprenant ledit service existant, lesdites données de commande doivent être insérées ; dans lequel
lesdites données de commande comprennent des informations de support radio indiquant un canal de trafic pour transmettre des données d'utilisateur d'un nouveau service et des informations de configuration pour transmettre lesdites données d'utilisateur.

2. Procédé selon la revendication 1, dans lequel ledit changement de service comprend la fourniture dudit nouveau service audit groupe d'utilisateurs multiples.

3. Procédé selon l'une quelconque des revendications précédentes, dans lequel ledit service existant est transmis sur un premier canal de transmission et lesdites données de commande sont transmises sur ledit premier canal de transmission ajouté aux données d'utilisateur dudit service existant.

4. Procédé selon l'une quelconque des revendications précédentes, dans lequel ledit flux de données multiplexées comprend un flux multiplexé de canaux de trafic différents transmettant chacun des données d'utilisateur différentes, ledit flux multiplexé comprenant une pluralité de blocs d'informations de planification MSI transmis avec une périodicité prédéterminée à chaque période de planification prédéterminée MSP, ledit indicateur indiquant l'emplacement où, par rapport à ladite période de planification prédéterminée, lesdites données de commande doivent être transmises.

5. Procédé selon l'une quelconque des revendications précédentes, ledit procédé comprenant en outre la transmission d'un format desdites données de commande avec ledit indicateur.

6. Entité de synchronisation (30) pour la diffusion de données par des stations de base multiples (40) vers des groupes d'utilisateurs multiples (70) par l'intermédiaire d'un réseau de communication sans fil de sorte que les mêmes données soient diffusées sensiblement au même moment par chacune desdites stations de base multiples (40), de sorte qu'un équipement utilisateur recevant le même signal provenant de stations de base multiples puisse utiliser les mêmes signaux multiples au moment du décodage, comprenant :
des circuits de réception (32) configurés pour recevoir des informations à partir d'un noeud de commande de réseau (20) concernant un changement de service à fournir à un premier groupe d'utilisateurs multiples recevant un service existant provenant d'une passerelle de diffusion/multidiffusion multimédia ;
une logique de commande (34) configurée pour générer un indicateur indiquant l'emplacement où, dans un flux de données multiplexées comprenant ledit service existant, des données de commande concernant ledit changement de service doivent être insérées ;
un émetteur (36) configuré pour transmettre lesdites données de commande concernant ledit changement de service auxdites stations de base multiples avec un indicateur de l'emplacement où, dans un flux de données multiplexées comprenant ledit service existant, lesdites données de commande doivent être insérées ;
dans laquelle
lesdites données de commande comprennent des informations de support radio indiquant un canal de trafic pour transmettre des données d'utilisateur d'un nouveau service et des informations de configuration pour transmettre lesdites données d'utilisateur.

7. Procédé de diffusion de données vers un groupe d'utilisateurs multiples par l'intermédiaire d'un réseau de communication sans fil par une station de base, comprenant les étapes suivantes :
recevoir au moins un flux de données d'utilisateur à fournir comme service existant à partir d'une passerelle de diffusion/multidiffusion multimédia vers un premier groupe d'utilisateurs multiples ;
recevoir à partir d'un noeud de commande de réseau des informations concernant un changement de service à fournir audit premier groupe d'utilisateurs multiples et **caractérisé en ce qu'**il reçoit un indicateur indiquant l'emplacement où, dans un flux de données multiplexées comprenant ledit service existant, des données de commande indiquant ledit changement de service doivent être insérées,
insérer lesdites données de commande dans ledit flux de données multiplexées audit emplacement indiqué par ledit indicateur de sorte que lesdites données de commande soient reçues par ledit premier groupe d'utilisateurs ; dans lequel
lesdites données de commande comprennent des informations de support radio indiquant un canal de trafic pour transmettre des données d'utilisateur d'un nouveau service et des informations de configuration pour transmettre lesdites données d'utilisateur ; et
diffuser ledit flux de données multiplexées.

8. Procédé selon la revendication 7, comprenant la transmission dudit service existant sur un premier canal de transmission et la transmission desdites données de commande sur ledit premier canal de transmission ajouté aux données d'utilisateur dudit service existant.

9. Procédé selon la revendication 7 ou 8, comprenant l'insertion d'un drapeau dans ledit flux de données multiplexées ledit drapeau indiquant que ledit flux de données multiplexées comprend lesdites données de commande.

10. Procédé selon la revendication 9, ledit flux de données multiplexées comprend un flux multiplexé de canaux de transmission différents, ledit service existant étant transmis sur un premier canal de transmission et ledit drapeau étant placé avant les données d'utilisateur soient transmises sur ledit premier canal de transmission.

11. Station de base (40) configurée pour diffuser des données vers un groupe d'utilisateurs multiples par l'intermédiaire d'un réseau de communication sans fil, comprenant :
un récepteur (42, 44) configuré pour recevoir au moins un flux de données d'utilisateur provenant d'une passerelle de diffusion/multidiffusion multimédia (25), lesdites données d'utilisateur devant être fournies comme service existant à un premier groupe d'utilisateurs multiples et pour recevoir à partir d'un noeud de commande de réseau (20) des informations concernant un changement de service à fournir audit premier groupe d'utilisateurs multiples et **caractérisé en ce que** le récepteur est en outre configuré pour recevoir un indicateur indiquant l'emplacement où, dans un flux de données multiplexées comprenant ledit service existant, des données de commande indiquant ledit changement de service doivent être insérées ;
une logique de commande configurée pour insérer lesdites données de commande dans ledit flux de données multiplexées audit emplacement indiqué par ledit indicateur de sorte que lesdites données de commande soient reçues par ledit premier groupe d'utilisateurs, dans laquelle
lesdites données de commande comprennent des informations de support radio indiquant un canal de trafic pour transmettre des données d'utilisateur d'un nouveau service et des informations de configuration pour transmettre lesdites données d'utilisateur.

12. Procédé de réception d'un flux de données multiplexées diffusé au niveau d'un équipement utilisateur ledit flux de données comprenant un flux multiplexé de canaux de transmission différents chacun transmettant des données d'utilisateur différentes, ledit flux multiplexé comprenant une pluralité de blocs d'informations de planification MSI transmis avec une périodicité prédéterminée à chaque période de planification prédéterminée MSP;
ledit équipement d'utilisateur comprenant un magasin de données pour stocker au moins une identité de groupe de transmission et un canal de transmission associé, ledit équipement d'utilisateur étant configuré pour surveiller au moins un canal de transmission associé à au moins une identité de groupe prédéterminée ; ledit procédé comprenant les étapes suivantes
recevoir ledit canal de transmission de ladite identité de groupe prédéterminée ; détecter des données de commande associées aux données d'utilisateur sur ledit canal de transmission reçu, lesdites données de commande comprenant des informations de support radio indiquant un canal de trafic pour transmettre des données d'utilisateur d'un nouveau service et des informations de configuration pour transmettre lesdites données d'utilisateur ;
déterminer un changement de service existant à partir desdites données de commande ;
surveiller ledit service changé.

13. Équipement d'utilisateur configuré pour recevoir un flux de données multiplexées diffusé, ledit flux de données comprenant un flux multiplexé de canaux de transmission différents chacun transmettant des données d'utilisateur différentes, ledit flux multiplexé comprenant une pluralité de blocs d'informations de planification MSI transmis avec une périodicité prédéterminée à chaque période de planification prédéterminée MSP ;
ledit équipement d'utilisateur (70) comprenant un magasin de données (75) pour stocker au moins une identité de groupe de transmission et un canal de transmission associé, ledit équipement d'utilisateur étant configuré pour surveiller au moins un canal de transmission associé à au moins une identité de groupe prédéterminée,
un récepteur (77) configuré pour recevoir ledit canal de transmission de ladite identité de groupe prédéterminée ;
une logique de commande (73) configurée pour détecter des données de commande associées à des données d'utilisateur sur ledit canal de transmission reçu et pour déterminer un changement de service existant à partir desdites données de commande et pour commander audit récepteur de surveiller ledit service changé ; dans lequel
lesdites données de commande comprennent des informations de support radio indiquant un canal de trafic pour transmettre des données d'utilisateur d'un nouveau service et des informations de configuration pour transmettre lesdites données d'utilisateur.

14. Programme informatique qui, lorsqu'il est exécuté par un appareil de traitement de données, commande ledit appareil de traitement de données pour réaliser un procédé selon l'une quelconque des revendications 1 à 5, 7 à 10 ou 12.
